# EUROPEAN PATENT SPECIFICATION

(11) **EP 2 237 976 B1**
(45) Date of publication and mention of the grant of the patent: **24.10.2012**
(21) Application number: 07866316.8
(22) Date of filing: 24.12.2007
(51) Int. Cl.: B60C 11/04, B60C 11/13

(54) **HEAVY LOAD VEHICLE TIRE**
FAHRZEUGREIFEN FÜR SCHWERLASTEN
PNEU POUR POIDS-LOURDS

(43) Date of publication of application: 13.10.2010
(73) Proprietor: Pirelli Tyre S.P.A., 20126 Milan (IT)
(72) Inventor: PIZZORNO, Tommaso, I-20126 Milano (IT)
(74) Representative: Colombo, Stefano Paolo
(86) International application number: PCT/EP2007/064531
(87) International publication number: WO 2009/080125

(56) References cited:
- EP-A- 0 356 369
- EP-A- 0 659 594
- JP-A- 2002 293 110
- US-A- 5 345 988

## Description

### Field of the invention

The present invention relates to a heavy load vehicle tire having improved axially outermost longitudinal grooves.

In particular, the present invention relates to a heavy load vehicle tire comprising improved axially outermost longitudinal grooves suitable for use on steering axle of heavy load.

### Background of the invention

As it is known, a radial tire which has to be mounted on a heavy load vehicle usually comprises a pair of bead structures, with each bead structure comprising at least one bead core and at least one bead filler; a carcass structure of a substantially toroidal shape, comprising at least one carcass ply usually including a plurality of reinforcing elements, extending between the bead structures, said carcass ply having its opposite lateral edges turned up around said bead core; a belt structure applied in a radially outer position with respect to said carcass structure; a tread band applied in a radially outer position with respect to said belt structure; and a pair of sidewalls applied laterally on opposite sides with respect to said carcass structure.

The tread band may exert a very important influence both on the performances of the tire (for example, in terms of prompt response to steering and of direction steadiness) and on the service life thereof.

In particular, the tread band of this kind of vehicle tire should have a good evenness in wear, together with a high output per kilometre.

US 5 345 988, corresponding with the preamble of claim 1, discloses a pneumatic radial tire for heavy loads EP 0 356 369 discloses a tread for a pneumatic tire EP 0 659 594 discloses a pneumatic tire for heavy load JP 2002 293110 discloses a tire for heavy load

European Patent Application EP 0 855 292 B1 relates to a tread pattern in particular for heavy duty motor-vehicles. It comprises two pairs of circumferential grooves defining a central land portion, two shoulder land portions, and two intermediate land portions each interposed between the central land portion and shoulder land portions. Land portions are provided with transverse narrow cuts each having their respective opposite ends spaced apart from the edges of the adjacent grooves. The circumferential shoulder grooves have stepped side walls. Arranged on the side walls of each groove are circumferentially-distributed auxiliary cuts extending over a short length inwardly of the respective circumferential land portion.

European Patent Application EP 1 698 491 A1 discloses a pneumatic tire for heavy load enabling the co-existence of wet performance and uneven wear resistance performance. The tire includes three circumferential main grooves extending on a tread in the circumferential direction, and ribs defined by these circumferential main grooves. The centerline of the center circumferential main groove among the three circumferential main grooves is positioned on the equator line of the tread and a thin rib-shaped uneven abrasion sacrificing part having a step in a clearance thereof from the surface of the tread is formed only in the center circumferential main groove.

The groove lateral walls of the tread band are subjected to a large bending deformation during the running of the tire. Because of said bending deformation, the generation of strains or the concentration of stresses may occur. As a result, there is a problem that formation of fatigue cracks may occur at said connection between the groove bottom and the groove lateral walls which, because of repetitiveness of said bending deformation, may cause longitudinal groove bottom failure by the growth of such cracks. Moreover, said bending deformation may give rise to heat buildup that may lead to degradation of the tire compounds present at the bottom of the longitudinal groves. Consequently, the tire durability is lowered.

The Applicant has observed that the above problems are more evident in the two axially outermost longitudinal grooves.

Moreover, the Applicant has observed that such two axially outermost longitudinal grooves may be subjected to further bending due to the fact that a heavy load vehicle is quite often obliged to get on/off pavements for performing manoeuvres such as a U turn or the like.

Moreover, the Applicant has observed that due to the loads, to which the tires, in particular the tires suitable for use on steering axle of heavy load, are subjected during running, the amplitude of strain cycles generated by the bending deformations on the axially outermost longitudinal grooves as well as the heat buildup mentioned above, may remarkably increase, so remarkably increasing also the risk of fatigue cracks occurrence therein.

The Applicant has thus faced the problem of providing a tire, in particular a heavy load vehicle tire suitable for use on steering axle of heavy load, wherein the generation of strains and the concentration of stresses, at the axially outermost longitudinal grooves and at the neighbourhood thereof, are remarkably reduced.

The Applicant has found that it is possible to obtain a tire having the above characteristics by providing at least one of the axially outermost longitudinal grooves with a fin rib following a path with is not parallel to the extension direction of respective axially outermost longitudinal groove.

According to a first aspect, the present invention relates to a tire comprising:
- a pair of bead structures;
- a carcass structure comprising at least one carcass ply extending between said bead structures, the opposite lateral edges of said carcass ply being associated with said bead structures;
- a tread band applied in a radially outer position with respect to said carcass structure;
- a pair of sidewalls, each sidewall being applied laterally on opposite sides with respect to said carcass structure;
wherein said tread band comprises two axially outermost longitudinal grooves, at least one further longitudinal groove and longitudinal ribs arranged between said longitudinal grooves;
wherein each axially outermost longitudinal groove extends along a substantially circumferential direction;
wherein each axially outermost longitudinal groove comprises two lateral walls;
wherein at least one of said axially outermost longitudinal grooves further comprises a fin rib;
wherein the fin rib follows a path substantially not parallel to the axially outermost longitudinal groove lateral walls.

For the aim of the present description and of the claims which follow, with "fin rib which follows a path substantially not parallel to the axially outermost longitudinal groove lateral walls" it has to be intended a path that is not parallel to the direction of the axially outermost longitudinal groove lateral walls for at least the 60% of its whole extension".

The Applicant has observed that the bending deformation to which the lateral walls of an axially outermost longitudinal groove comprising the fin rib according to the present invention is subjected during running of the tire, even when the tire is subjected to very large loads, are remarkably reduced.

The risk of fatigue cracks occurrence in said axially outermost longitudinal grooves is thus remarkably reduced. Also the heat buildup mentioned above remarkably reduces.

According to one preferred embodiment, said tire is a heavy load vehicle tire.

For the aim of the present description and of the claims which follow, the expression "heavy load vehicle" means a vehicle of categories M2-M3, N2-N3 and 02-04, according to ECE Consolidated Resolution of the Construction of Vehicles (R.E.3) (1997), Annex 7, pg. 52-59, "Classification and definition of power-driven vehicles and trailers", such as, for example, truck, tractor trailers, lorries, buses, large vans, and other similar vehicles.

The present invention may show one or more of the preferred characteristics hereinafter described.

Preferably, each axially outermost longitudinal groove is parallel to the axial centerline of the tire.

According to one preferred embodiment , the fin rib may follow a wave path.

In an alternative embodiment, the fin rib may follow a zig-zag path.

Preferably, the fin rib may follow a substantially periodic path with a predetermined period A.

More preferably, the fin rib follows a sinusoidal path.

The alternate and repetitive path of the fin rib results in a sort of bridge between the two opposite lateral surfaces of the respective axially outermost groove giving rise to a substantial reduction of the mobility of the same groove and consequently to a reduction of compound fatigue.

Moreover, the fin rib acts against the opening and the closing movements of the opposite lateral walls of the groove.

According to a further preferred embodiment, the fin rib has a constant width along its path when measured transversely to the fin rib.

In an alternative embodiment, the fin rib has a width which along its path is not constant when measured transversely to the fin rib.

Preferably, each fin rib has a width ranging from about 20% to about 70% of a width of the corresponding axially outermost longitudinal groove.

According to a further preferred embodiment the fin rib has two lateral surfaces and it is configured so that the lateral surfaces alternatively contact, at predetermined points, the corresponding lateral walls of the corresponding axially outermost longitudinal groove.

In an alternative embodiment, the fin rib has two lateral surfaces and it is configured so that said lateral surfaces do not contact the corresponding lateral walls of the corresponding axially outermost longitudinal groove.

According to a further preferred embodiment, the height of the fin rib substantially corresponds to a height of the outermost longitudinal groove of the fin rib.

In an alternative embodiment, the height of the fin rib is less than a height of the axially outermost longitudinal groove of said fin rib.

This arrangement is advantageous in that this improves the ejection of water from the tread.

According to a further preferred embodiment, the fin rib has a top surface parallel to a top surface of adjacent ribs.

This arrangement is profitable in view of allowing a regular wear of the tire, in particular during running of the tire, when it is subject to a load.

According to a further preferred embodiment, the lateral surfaces of said fin rib are parallel one to the other along the fin rib path.

According to a further preferred embodiment, the fin rib comprises fin rib portions which are separated one from the other through transverse cuts.

According to a further preferred embodiment, each of said axially outermost longitudinal grooves comprises a fin rib.

Preferably, the fin ribs at the two axially outermost longitudinal grooves are substantially parallel one with respect to the other.

### Brief description of the drawings

Additional features and advantages of the invention will be better apparent from the following description of some preferred embodiments of a tire according to the present invention, which description is made, by way of non-limiting example, with reference to the attached Figures wherein:
- Fig. 1 is a view in cross-section of a portion of a tire according to one embodiment of the present invention;
- Figs. 2a and 2b are two simplified views in cross-section of a portion of tread band of the tire of Fig. 1;
- Fig. 3 shows, in plane view, a portion of an axially outermost longitudinal groove according to one embodiment of the present invention, wherein the fin rib connects, at predetermined points, to the walls of the longitudinal groove, as it is shown in the circle;
- Fig. 4 shows, in plane view, a portion of an axially outermost longitudinal groove according to one embodiment of the present invention, wherein the fin rib is separated from the lateral walls of the longitudinal groove, as it is shown in the circle;
- Fig. 5 is similar to Figure 3 but it contains references to the cross sections of Figs. 5a, 5b and 5c;
- Figs. 6a to 6c are simplified plane views of respective portions of tread bands according to respective embodiments of the present invention, such tread bands comprising three, four and five longitudinal grooves, respectively;
- Figs. 7a to 7d are simplified plane views of portions of axially outermost longitudinal grooves with respective fin ribs according to embodiments of the present invention;
- Figs. 8a to 8f show, in cross sections, various configurations of the bottom wall of the sidewall longitudinal groove and of the top surface and of the lateral surfaces of the fin rib according to the present invention;
- Figs. 9a to 9c show respective interrupted fin ribs according to embodiments of the present invention; and
- Figs. 10a to 10c are simplified plane views of respective portions of tread bands according to respective embodiments of the present invention showing fin ribs in phase, in counter phase and not in phase, respectively.

It has to be intended that in the various figures, the same reference numbers, as well as the same reference letters, have the same meanings.

### Detailed description of preferred embodiments

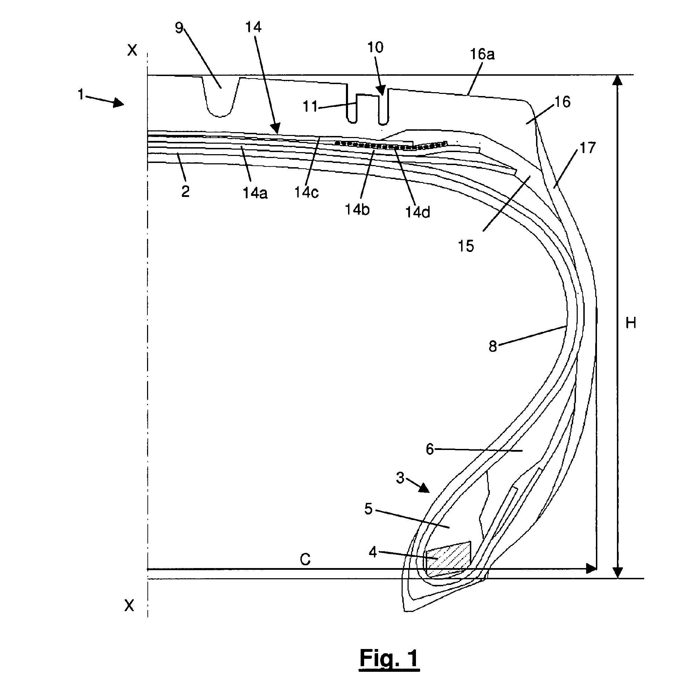

For simplicity, Fig. 1 shows only a portion of the tire 1, the remaining portion not represented being identical and symmetrically arranged with respect to equatorial plane X-X of the tire.

For the aim of the present description and of the claims which follow the "tire equatorial plane" is the plane perpendicular to the tire rotational axis and containing the axial centerline of the tire.

The tire 1 comprises at least one carcass ply 2, the opposite lateral edges of which are associated with respective bead structures 3 comprising a bead core 4 and at least one bead filler 5, 6. The association between said carcass ply 2 and said bead structure 3 is achieved by turning back the opposite lateral edges of said carcass ply 2 around said bead core 4 and said at least one bead filler 5, 6 so as to form a turned up carcass ply.

The carcass ply 2 generally comprises a plurality of reinforcing elements arranged parallel to each other and at least partially coated with a layer of a crosslinked elastomeric material. These reinforcing elements, in particular in case of heavy load vehicle tires, are usually made of steel wires stranded together, coated with a metal alloy such as, for example, copper/zinc, zinc/manganese, zinc/molybdenum/cobalt alloys, or mixtures thereof, and the like. Textile fibres such as, for example, rayon, nylon, or polyethylene terephthalate, or mixtures thereof, may be used for different types of tires.

The carcass ply 2 is usually of radial type, i.e. it incorporates reinforcing elements arranged in a substantially perpendicular direction relative to a circumferential direction.

A belt structure 14 is applied in a radially outer position with respect to said at least one carcass ply 2. In the particular embodiment of Fig. 1, the belt structure 14 comprises three belt layers 14a, 14b and 14c, which are radially superimposed and which incorporate a plurality of reinforcing elements, typically metal cords, said reinforcing elements being parallel to each other in each layer and intersecting with respect to the adjacent layer, inclined preferably in a symmetrical manner with respect to the equatorial plane X-X of the tire at an angle of from 10° to 70°, preferably of from 12° to 40°, and coated with a crosslinked elastomeric material.

Preferably, said reinforcing elements have a density of from 30 cords/dm to 80 cords/dm, preferably of from 40 cords/dm to 65 cords/dm, measured on said three belt layers 14a, 14b and 14c, in a circumferential direction, close to the equatorial plane X-X of the tire 1.

Said belt layer 14c may act as a protection layer from stones or gravel possibly entrapped into the tread grooves and which may cause damages to the belt structure 14 and even to the carcass ply 2.

According to the particular embodiment of Fig. 1, the belt structure 14 further comprises a lateral reinforcing layer 14d, commonly known as "zero-degree reinforcing layer", radially superimposed on the carcass ply 2. Said lateral reinforcing layer generally incorporates a plurality of reinforcing elements, typically metal cords with a breakage elongation value of from 3.0% to 10%, preferably of from 3.5% to 7.0%, said reinforcing elements being oriented in a substantially circumferential direction, thus forming an angle of a few degrees (e.g., an angle of from 0° to 5°) with respect to the equatorial plane X-X of the tire, and coated with a crosslinked elastomeric material. Preferably, said reinforcing elements have a density of from 30 cords/dm to 80 cords/dm, preferably of from 40 cords/dm to 60 cords/dm, measured on said lateral reinforcing layer, in a circumferential direction, close to the equatorial plane X-X of the tire.

In the particular embodiment of Fig. 1, an insert 15 comprising a crosslinked elastomeric material is located at the buttress area, i.e. the area where the lateral edges of the tread band 16 is connected to the sidewall 17. Usually, the insert 15 is interposed between the carcass ply 2, the belt structure 14 and the sidewall 17.

A sidewall 17 is applied externally onto the carcass ply 2, this sidewall extending, in an axially outer position, from the bead structure 3 to the lateral edge of the tread band 16.

A tread band 16, whose lateral edges are connected to the sidewall 17, is applied in a radially outer position with respect to said belt structure 14. Externally, the tread band 16 has a rolling surface 16a designed to come into contact with the ground. Circumferential grooves 9, 10 which may be connected by transverse notches (not represented in Fig. 1), define a tread pattern which comprises a plurality of ribs and/or blocks of various shapes and sizes distributed over the rolling surface 16a. Reference number 10 designates the axially outermost longitudinal grooves whilst reference number 9 designates the other longitudinal grooves. Such longitudinal grooves 9 are also referred to as central longitudinal grooves in the present description and in the claims. Reference 11 designates a fin rib following a predetermined path in at least one of the axially outermost longitudinal grooves. The fin rib 11 and its function according to the present invention will be better described in the following.

In the particular embodiment of Fig. 1, a rubber layer 8, generally known as a liner, which provides the necessary impermeability to the inflation air of the tire, is provided in a radially inner position with respect to said carcass ply 2.

Preferably, the tire 1 according to the present invention has an aspect ratio (H/C) higher than or equal to about 0.4, preferably less than or equal to about 1.1, more preferably equal to about 0.8.

Said aspect ratio is the ratio of the tire cross-section height H, i.e. the radial distance from the tire nominal rim diameter RW to the outer diameter of the tire at its equatorial plane, divided by the tire cross-section width C, i.e. the maximum linear distance parallel to the tire rotation axis between the outer surfaces of the sidewalls (the above dimensions are determined according to the ETRTO Standard (2006), pg. 4-5).

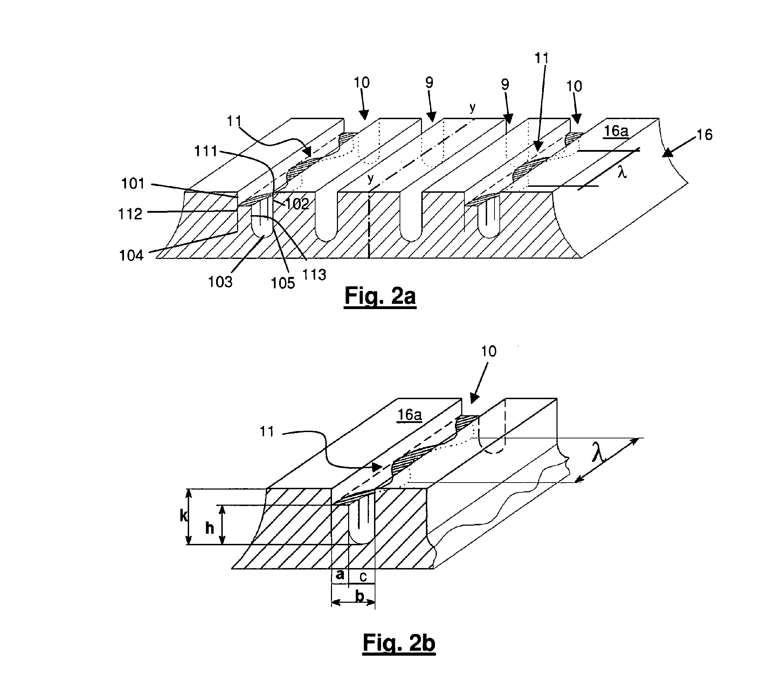

Fig. 2a schematically shows a portion of a tread band 16 of an embodiment of heavy load vehicle tire suitable for use on steering axle. The tread band 16 has four longitudinal grooves, namely two axially outermost longitudinal grooves 10 and two central longitudinal grooves 9. The tread band 16 comprises also three central ribs and two shoulder portions 16a. The two central longitudinal grooves 9 separate one rib from the others while the two axially outermost longitudinal grooves 10 separate the three central ribs from the shoulder portions.

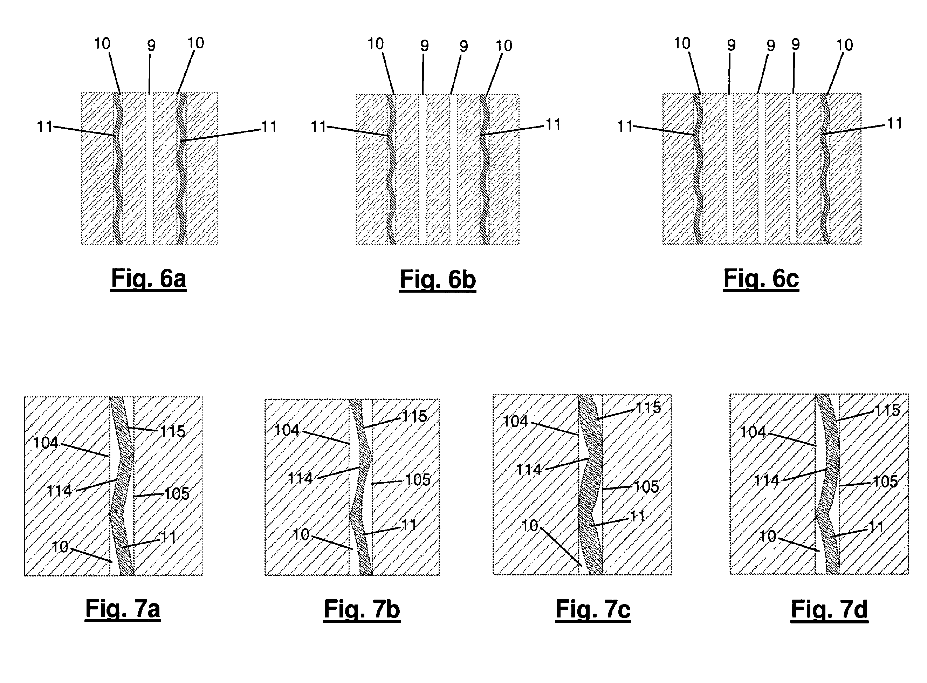

Alternatively, the total number of longitudinal grooves 9, 10, and consequently the total number of ribs, can be other than four, for instance three (this means a single central longitudinal groove 9 as in Fig. 6a), five (this means three central longitudinal grooves 9 as in Figs. 1e and 6c) or more (namely, more than three central longitudinal grooves 9).

Each one of the axially outermost longitudinal grooves 10 has two facing lateral walls 101, 102 and a bottom wall 103. The bottom wall 103 can be substantially flat or curved as schematically shown in Fig. 2a.

The two lateral walls 101, 102 connect to the bottom wall 103 at two respective axially outermost longitudinal groove bottom lines 104, 105. According to embodiments of the present invention, such two bottom lines 104, 105 run parallel and are parallel to the axial centreline Y-Y of the tire. Therefore, as it is shown in various Figures, for instance in Figs. 2a and 6a to 6c, the axially outermost longitudinal groove bottom lines 104, 105 of each axially outermost longitudinal groove 10 are parallel one to the others.

The outermost longitudinal grooves 10 have a width ranging from about 10 mm to about 20 mm. Preferably, from 11 a 15 mm, for example 14,5 mm. The outermost grooves 10 have a depth ranging from about 12 mm to about 20 mm. Preferably from 12 to 17mm.

The lateral walls 101, 102 of the axially outermost longitudinal groove 10 have an inclination of ranging from 0° to about 20° relative to its mid-line axis. In particular, the lateral walls 101, 102 have an inclination relative to its mid-line axis of about 15° relative to the mid-line axis of the same groove 10.

Preferably, the axially central longitudinal grooves 9 of the tread have a smaller width than that of axially outermost longitudinal grooves 10, so as to allow tread band to offer more support surface when running on a bend, thus increasing handling of the tyre.

In detail, the width of the longitudinal grooves 9 can be included in the range between 10 and 20 mm. Preferably from 10 to 15 mm. The longitudinal grooves 9 can have a depth smaller than 20 mm, preferably greater than 12 mm, equal to 8 mm for example.

Alternatively, all the longitudinal grooves, i.e. the axially outermost and the axially central, could have the same width and/or depth without departing from the protection scope of the present invention.

According to embodiments of the present invention, each of the axially outermost longitudinal groove 10 comprises a fin rib 11.

The fin rib 11 follows a path substantially not parallel to the axially outermost longitudinal groove lateral side walls 101, 102.

Each fin rib 11 comprises a top surface 111 and two lateral surfaces 112, 113.

Each of the lateral surfaces 112, 113 of a fin rib 11 connects to the bottom wall 103 of the corresponding axially outermost longitudinal groove 10 at a fin rib bottom line 114, 115.

Each of the fin rib bottom lines 114, 115 is not parallel to the axially outermost longitudinal groove bottom lines 104, 105.

Preferably, the fin rib 11 follows a wave path, a zig-zag path or the like.

In a preferred embodiment of the present invention the fin rib 11 follows a periodic path, preferably sinusoidal, with a predetermined period λ.

In all the above cases, a distance measured parallel to the axis of the tire between a point of the axially outermost longitudinal groove lateral walls 102, 103 and a corresponding point of the fin rib lateral walls 112, 113 varies through the circumferential direction.

Such a distance has been designated by reference letter "c" in Fig. 2b. In Fig. 2b a width of the axially outermost longitudinal groove 10 has been designated by reference letter "b", a width of the fin rib 11 has been designated by reference letter "a", a height of the axially outermost longitudinal groove 10 has been designated by reference letter "k", a height of the fin rib 11 has been designated by reference letter "h" and the period of the fin rib 11 has been designated by reference letter "λ".

In a preferred embodiment, the height h of the fin rib 11 is lower than the height k of the corresponding axially outermost longitudinal groove 10. This arrangement is advantageous in that this improves the ejection of water from the tread. The height h of the fin rib can be from about 20% to about 80% of the height k of the corresponding longitudinal groove. Preferably it is from about 50 % to about 80% of the height k. More preferably, it is from about 70 % to about 80% of the height k.

Alternatively, the height h of the fin rib 11 could substantially correspond to the height k of the corresponding axially outermost longitudinal groove 10.

It is preferable that the width a of the fin rib 11 ranges from about 20% to about 70% of the width b of the axially outermost longitudinal groove 10. In one preferred embodiment, such width a of the fin rib 11 ranges from about 40 % to about 60% of the width b of the axially outermost longitudinal groove 10.

According to preferred embodiments of the present invention, the lateral surfaces 112, 113 of the fin rib 11 converge towards the top surface 111 of the fin rib 11.

The tapering towards the top surface 111 of the fin rib 11 result in a structural stiffening of the fin rib base.

In other words, the tapering towards the top surface 111 strengthens the part of the fin rib 11 that could be more subject to the fatigue cracks.

According to different embodiments, the lateral surfaces 112, 113 of the fin rib 11 are parallel one to the other.

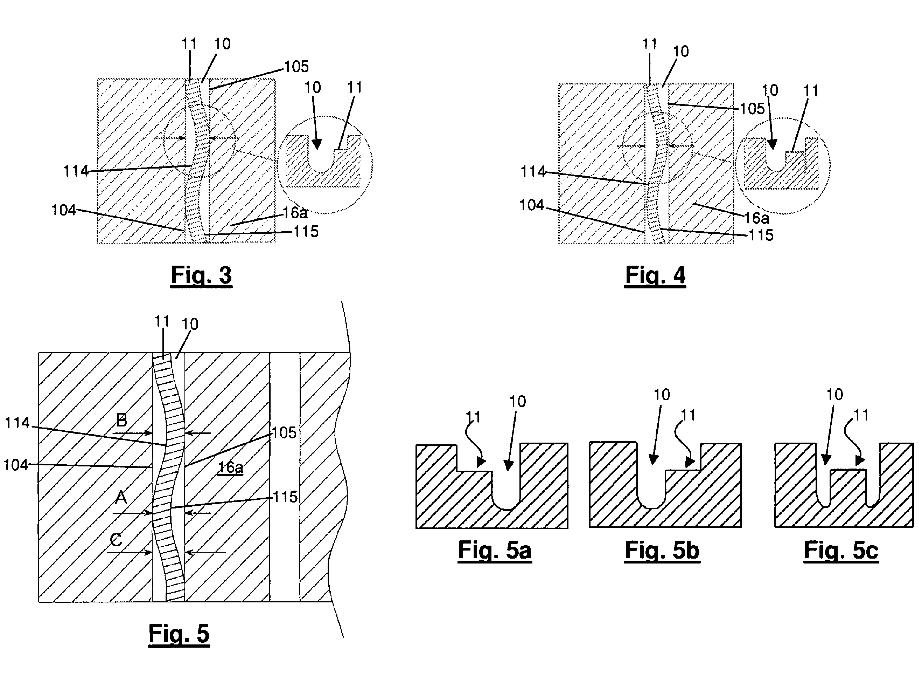

According to one embodiment (see, inter alia, Figs. 3 and 5), the fin rib 11 is configured so that its lateral surfaces 112, 113 alternatively contact at predetermined points the corresponding lateral walls 101, 102 of the axially outermost longitudinal groove 10. According to such an embodiment, the distance c varies between a maximum distance cₘₐₓ to a minimum distance cₘᵢₙ equal to zero.

Figs. 5a to 5c, shows in cross sections, the fin rib 11 in a different point along a substantially circumferential direction according to the present invention.

In particular in Fig.5a it is shown a cross section of the fin rib 11 wherein the lateral wall 101 of the fin rib 11 contacts the lateral wall 111 of the axially outermost longitudinal groove 10. At this point the lateral wall 101 of the fin rib is integral with the lateral wall 111. In this section, the distance c between the lateral wall 102 of the fin rib 11 and the lateral wall 112 of the axially outermost longitudinal groove 10 is maximum.

In particular Fig. 5b it is shown a mirror-like configuration of that Fig. 5a with respect to the mid-line of the axially outermost longitudinal groove 10.

In Fig. 5c it is shown a cross section of the fin rib 11 wherein the lateral walls 101, 102 of the fin rib 11 are in intermediate position with respect to the lateral walls 111, 112 of the axially outermost longitudinal groove 10. In other words an intermediate value of distance c is shown in Fig. 5c.

It should be clear that the above described embodiment wherein the fin rib lateral surfaces 112, 113 contact at predetermined points the corresponding lateral walls 101, 102 of the axially outermost longitudinal groove 10 in particular includes embodiments wherein the fin rib 11 is integral, at predetermined points, with the lateral walls 101, 102 of the axially outermost longitudinal groove 10. In these predetermined points, for the fin rib 11 integral with a wall 101 or 102 of the axially outermost longitudinal groove 10 has to be intended that the distance c, in the contact point is practically equal to zero.

Also included are embodiments wherein only the axially outermost longitudinal groove bottom lines 104, 105 touch the fin rib bottom lines 114, 115 at predetermined points.

The alternate and repetitive path of the fin rib 11 results in a sort of bridge between the two opposite lateral surfaces 101 or 102 of the groove 10 giving rise to a substantial reduction of the mobility of the same groove 10 and consequently to a reduction of compound fatigue.

Moreover, the fin rib 11 acts against the opening and the closing movements of the opposite lateral walls 112, 113' of the groove 10.

According to another embodiment (see Fig. 4) the fin rib 11 is configured so that its lateral surfaces 112, 113 do not contact the corresponding lateral walls 101, 102 of the axially outermost longitudinal groove 10. In this case, between the fin rib lateral surface 112 (or 113) closer to the lateral wall 101 (102) of the axially outermost groove and the same lateral wall a gap remains. Such a gap can be from about 0,5 mm to about 3,0 mm. Preferably, it is about 1,0 mm.

Also in this case, the fin rib 11 acts against the opening and the closing movements of the opposite lateral surfaces 112, 113 of the groove 10. The gap between the fin rib lateral surface 112 (or 113) closer to the lateral wall 101 (102) of the axially outermost groove and the same lateral wall 101,102 facilitates the water drainage.

The fin rib pitch λ may be substantially constant along the whole fin rib path. The Applicant has found that advantageous results are obtained when λ/b≥2 and λ/b<15, wherein b, as said above, is the width of the axially outermost longitudinal groove 10.

Indeed the Applicant has found that bending deformation to which an axially outermost longitudinal groove comprising the fin rib with a pitch according to the above range is subjected during running of the tire, even when the tire is subjected to very large loads, are remarkably reduced.

In other embodiments, the fin rib pitch A varies along the whole fin rib path.

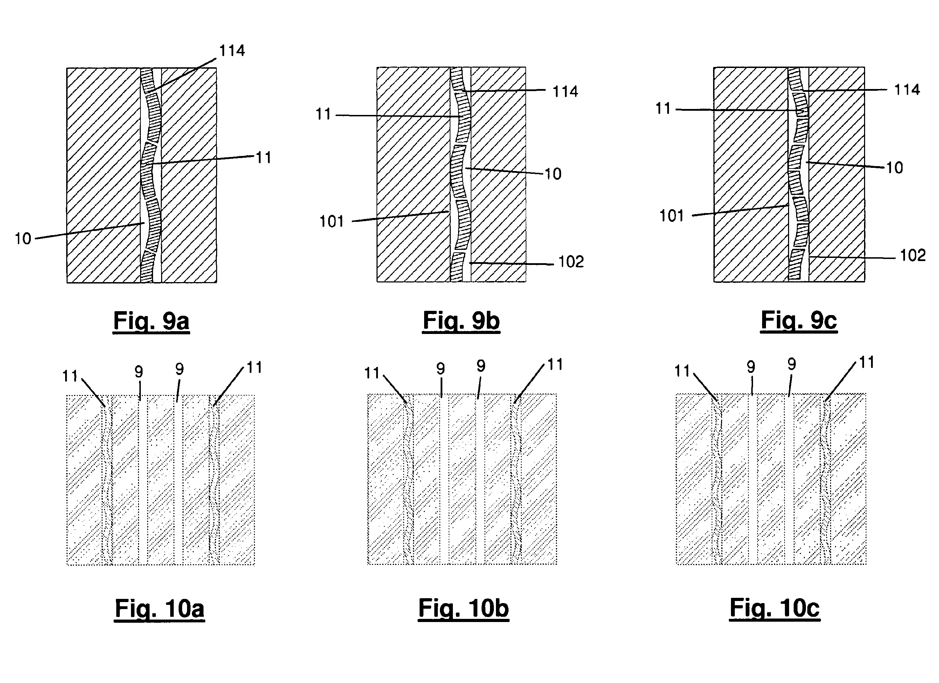

In the case wherein the fin rib 11 follows a substantially periodic path, the fin ribs 11 at the two axially outermost longitudinal grooves 10 may run circumferentially parallel one respect to the other in the two axially outermost longitudinal grooves 10, in other words in this case the fin ribs 11 are in phase as it is shown in Figure 10a. However, as it is shown in Fig. 10b, the fin ribs 11 at the two axially outermost longitudinal grooves 10 can be in counter-phase. In a further embodiment, as it is shown in Fig. 10c, the fin ribs 11 at the two axially outermost longitudinal grooves 10 can be out of phase.

Figs. 6a, 6b and 6c show portions of three different tread bands 16, each comprising three, four and five longitudinal grooves 9, 10. In each of the tread bands 16 of Figs. 6a to 6c each of the axially outermost longitudinal grooves 10 is provided with a fin rib 11 according to one embodiment of the present invention. Preferably, according to the present invention, the central longitudinal grooves do not comprise any fin rib 11.

The fin rib 11 can have a shape different from the wave shape (or sinusoidal shape) shown in Figs. 2a, 2b, 3, 4, 5 or 6.

Fig. 7a shows an alternative shape of the fin rib 11 according to the present invention. According to such an alternative shape, each of the fin rib bottom lines 114, 115 comprises substantially straight segments forming a substantially "Z" path. The segments at the two lateral surfaces 112, 113 of the fin rib 11 are substantially parallel so that the fin rib width (a) is substantially the same.

Fig. 7b shows a further alternative shape of the fin rib 11 according to the present invention. According to such an alternative shape, each of the fin rib bottom line 114, 115 comprises substantially concave segments so that the fin rib width (a) varies. Such a width is minimum substantially where the value of distance c is intermediate.

Fig. 7c shows a further alternative shape of the fin rib 11 according to the present invention. According to such an alternative shape, each of the fin rib bottom line 114, 115 comprises substantially convex segments so that the fin rib width (a) varies. Such a width is maximum substantially where the value of distance c is intermediate.

Fig. 7d shows a still further alternative shape of the fin rib according to the present invention. According to such an alternative shape, each of the fin rib bottom line 114, 115 comprises substantially curved segments which run parallel and are curve shaped.

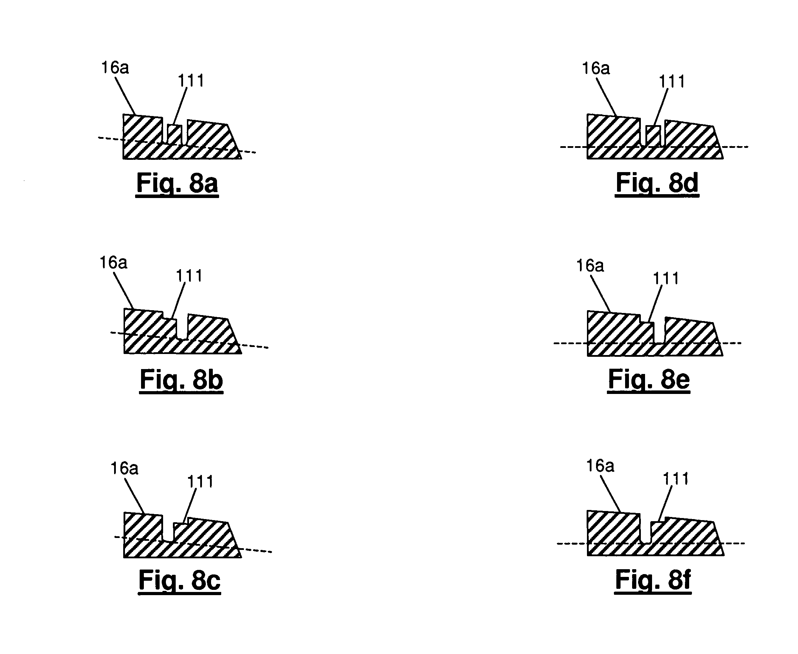

As it is shown in Figs. 8a to 8c, the top surface 111 of the fin rib 11 can be substantially parallel to the top surface 16a of the adjacent ribs. This arrangement is profitable in view of allowing a regular wear of the tire, in particular during running of the tire, when it is subject to a load.

In one alternative embodiment (see the cross-sections of the Figs. 8d to 8f), the top surface 111 of the fin rib 11 is not parallel to the top surface 16a of the adjacent ribs. This arrangement is profitable in view of facilitating the manufacturing of the moulds used for vulcanizing the tire. Preferably, also in this embodiment the bottom wall 103 of the axially outermost external longitudinal groove 10 is parallel to the top surface 111 of the fin rib 11.

According to embodiments of the present invention, the lateral surfaces 112, 113 of the fin rib 11 are parallel one to the other. According to different embodiments, such lateral surfaces converge towards the top surface 111 of the fin rib 11.

According to embodiments of the present invention, the fin rib 11 is uninterrupted.

According to alternative embodiments, the fin rib 11 comprises fin rib portions which are separated one from the other through transverse cuts 114 (see Figs 9a, 9b and 9c). Such cuts 114 can be substantially perpendicular to the lateral surfaces 112, 113 of the fin rib 11 as it is shown in Fig. 9a. The cuts may have a width ranging from about 0,2 mm to about 5 mm. Preferably from 0,5 to 1,0 mm. The cuts may have a depth ranging from 2 mm to 20 mm, preferably smaller than 20 mm.

In the preferred embodiment all the cuts 114 have the same width and depth, however they could have different width and depth one to respect to the other without exiting from the scope of the present invention.

In one alternative embodiment (see Figs. 9b and 9c), such cuts 114 are perpendicular to the lateral surfaces 101, 102 of the axially outermost longitudinal groove 10 (and therefore they are substantially axially directed). The length between two cuts 114 can be from about 5 mm to about 70 mm. Preferably, it is of about 50 mm.

The number of cuts in a fin rib pitch can range from 1 to 10. Preferably the number of cuts in a fin rib pitch ranges from 2 to 8.
Distance cₘₐₓ is reached when the lateral surface 112 (or 113) of the fin rib 11 contacts the lateral wall 101 (or 102) of the axially outermost longitudinal groove 10 (see Fig. 5a).
In this configuration, the other lateral surface 113 (or 112) of the fin rib 11 is at the maximum distance from the corresponding lateral wall 102 (or 101) of the axially outermost longitudinal groove 10. When the other surface 113 (or 112) of the fin rib 11 contacts the corresponding lateral wall 102 (or 101) of the axially outermost longitudinal groove 10, the distance c reaches its minimum value cₘᵢₙ (see Fig. 5b). An intermediate value of distance c is shown in Fig. 5c.

It should be clear that the above described embodiment wherein the fin rib lateral surfaces 112, 113 contact at predetermined points the corresponding walls 101, 102 of the axially outermost longitudinal groove 10 in particular includes embodiments wherein the fin rib 11 is integral, at predetermined points, with the walls 101, 102 of the axially outermost longitudinal groove 10. In these predetermined points, for the fin rib 11 integral with a wall 101 or 102 of the axially outermost longitudinal groove 10 has to be intended that the distance c, in the contact point is substantially equal to zero.

Also included are embodiments wherein only the axially outermost longitudinal groove bottom lines 104, 105 touch the fin rib bottom lines 114, 115 at predetermined points.

The alternate and repetitive path of the fin rib 11 results in a sort of bridge between the two opposite side surfaces 101 or 102 of the groove 10 giving rise to a substantial reduction of the mobility of the same groove 10 and consequently to a reduction of compound fatigue.

The fin rib 11 acts against the opening and the closing movements of the opposite side walls 112,113 of the groove 10.

According to another embodiment (see Fig. 4) the fin rib 11 is configured so that its lateral surfaces 112, 113 do not contact the corresponding lateral walls 101, 102 of the axially outermost longitudinal groove 10. In this case, between the fin rib lateral surface 112 (or 113) closer to the lateral wall 101 (102) of the axially outermost groove and the same lateral wall a gap remains. Such a gap can be from about 0,5 mm to about 3,0 mm. Preferably, it is about 1 mm width.

Also in this case, the fin rib 11 acts against the opening and the closing movements of the opposite lateral surfaces 112, 113 of the groove 10 and the gap between the fin rib lateral surface 112 (or 113) closer to the lateral wall 101 (102) of the axially outermost groove and the same lateral wall facilitates the water drainage.

The fin rib pitch A may be substantially constant along the whole fin rib path. The Applicant has found that advantageous results are obtained when λ/b≥2 and λ/b<15, wherein b, as said above, is the width of the axially outermost longitudinal groove 10.

Indeed the Applicant has found that bending deformation to which an axially outermost longitudinal groove comprising the fin rib with a pitch according to the above range s subjected during running of the tire, even when the tire is subjected to very large loads, are remarkably reduced.

In other embodiments, the fin rib pitch λ varies along the whole fin rib path.

In the case wherein the fin rib 11 follows a substantially periodic path, the fin ribs 11 at the two axially outermost longitudinal grooves 10 may run circumferentially one respect to the other in the two axially outermost longitudinal grooves 10, in other words in this case the fin ribs 11 are in phase as it is shown in Figure 10a. However, as it is shown in Fig. 10b, the fin ribs 11 at the two axially outermost longitudinal grooves 10 can be in counter-phase. In a further embodiment, as it is shown in Fig. 10c, the fin ribs 11 at the two axially outermost longitudinal grooves 10 can be not in phase.

Figs. 6a, 6b and 6c show portions of three different tread bands 16, each comprising three, four and five longitudinal grooves 9, 10. In each of the tread bands 16 of Figs. 6a to 6c each of the axially outermost longitudinal grooves 10 is provided with a fin rib 11 according to one embodiment of the present invention. Preferably, according to the present invention, the central longitudinal grooves do not comprise any fin rib 11.

The fin rib 11 can have a shape different from the wave shape (or sinusoidal shape) shown in Figs. 2a, 2b, 3, 4, 5 or 6.

Fig. 7a shows an alternative shape of the fin rib 11 according to the present invention. According to such an alternative shape, each of the fin rib bottom lines 114, 115 comprises substantially straight segments forming a substantially "Z" path. The segments at the two lateral surfaces 112, 113 of the fin rib 11 are substantially parallel so that the fin rib width (a) is substantially the same.

Fig. 7b shows a further alternative shape of the fin rib 11 according to the present invention. According to such an alternative shape, each of the fin rib bottom line 114, 115 comprises substantially concave segments so that the fin rib width (a) varies. Such a width is minimum substantially where the value of distance c is intermediate.

Fig. 7c shows a further alternative shape of the fin rib 11 according to the present invention. According to such an alternative shape, each of the fin rib bottom line 114, 115 comprises substantially convex segments so that the fin rib width (a) varies. Such a width is maximum substantially where the value of distance c is intermediate.

Fig. 7d shows a still further alternative shape of the fin rib according to the present invention. According to such an alternative shape, each of the fin rib bottom line 114, 115 comprises substantially curved segments which run parallel and are curve shaped.

As it is shown in Figs. 8a to 8c, the top surface 111 of the fin rib 11 can be substantially parallel to the top surface 16a of the adjacent ribs. This arrangement is profitable in view of allowing a regular wear of the tire, in particular during running of the tire, when it is subject to a load.

In one alternative embodiment (see the cross-sections of the Figs. 8d to 8f), the top surface 111 of the fin rib 11 is not parallel to the top surface 16a of the adjacent ribs.

This arrangement is profitable in view of making easy the moulds for making the tire. Preferably, also in this embodiment the bottom wall 103 of the axially outermost external longitudinal groove 10 is parallel to the top surface 111 of the fin rib 11.

The bottom wall 103 of axially outermost longitudinal grooves 10 can be parallel to the top surface 16a of the adjacent ribs (Figs. 8a, 8b and 8c) and to the top surface 111 of the fin rib 11. As an alternative, the bottom wall 103 of axially outermost longitudinal grooves 10 is not parallel to the top surface 16a of the adjacent ribs (Figs. 8a, 8b and 8c) but it is parallel to the top surface 111 of the fin rib 11.

According to embodiments of the present invention, the lateral surfaces 112, 113 of the fin rib 11 are parallel one to the other. According to different embodiments, such lateral surfaces converge towards the top surface 111 of the fin rib 11.

According to embodiments of the present invention, the fin rib 11 is uninterrupted.

According to alternative embodiments, the fin rib 11 comprises fin rib portions which are separated one from the other through transverse cuts 114 (see Figs 9a, 9b and 9c). Such cuts 114 can be substantially perpendicular to the lateral surfaces 112, 113 of the fin rib 11 as it is shown in Fig. 9a. The cuts have a width ranging from about 0,2 mm to about 5 mm. Preferably from 0,5 to 1,0 mm. The cuts have a depth ranging from 2 mm to 20 mm, preferably smaller than 20 mm.

In the preferred embodiment all the cuts 114 have the same width and depth, however they could have different width and depth one to respect to the other whithout exit from the scope of the present invention.

In one alternative embodiment (see Figs. 9b and 9c), such cuts 114 are perpendicular to the lateral surfaces 101, 102 of the axially outermost longitudinal groove 10 (and therefore they are substantially axially directed). The length between two cuts 114 can be from about 5 mm to about 70 mm. Preferably, it is of about 50 mm.

The number of cuts in a fin rib pitch can range from 1 to 10. Preferably the number of cuts in a fin rib pitch ranges from 2 to 8.

Typically, the fin ribs 11 at the two axially outermost longitudinal grooves 10 are in phase as it is shown in Figure 10a. However, as it is shown in Fig. 10b, the fin ribs 11 at the two axially outermost longitudinal grooves 10 can be in counter-phase. In a further embodiment, as it is shown in Fig. 10c, the fin ribs 11 at the two axially outermost longitudinal grooves 10 can be not in phase.

## Claims

1. A tire (1) comprising:
- a pair of bead structures (3);
- a carcass structure comprising at least one carcass ply (2) extending between said bead structures (3), the opposite lateral edges of said carcass ply (2) being associated with said bead structures (3);
- a belt structure (14) applied in a radially outer position with respect to said carcass structure;
- a tread band (16) applied in a radially outer position with respect to said carcass structure;
- a pair of sidewalls (17), each sidewall (17) being applied laterally on opposite sides with respect to said carcass structure;
wherein said tread band (16) comprises two axially outermost longitudinal grooves (10), at least one further longitudinal groove (9) and longitudinal ribs arranged between said longitudinal grooves (10);
wherein each axially outermost longitudinal groove (10) extends along a substantially circumferential direction;
wherein each axially outermost longitudinal groove (10) comprises two lateral
wherein at least one of said axially outermost longitudinal grooves (10) further comprises a fin rib (11);
**characterized in that**
the fin rib (11) follows a path substantially not parallel to the axially outermost longitudinal groove lateral walls (101, 102); and
**in that** said fin rib (11) has two lateral surfaces (112, 113) and it is configured so that said lateral surfaces (112, 113) alternatively contact, at predetermined points, the corresponding lateral walls (101, 102) of the corresponding axially outermost longitudinal groove (10).

2. The tire (1) according to claim 1, wherein each axially outermost longitudinal groove (10) is parallel to an axial centerline of the tire (y-y).

3. The tire (1) according to claim 1, wherein said fin rib (11) follows a wave path.

4. The tire (1) according to claim 1, wherein said fin rib (11) follows a zig-zag path.

5. The tire (1) according to claim 1, wherein said fin rib (11) follows a substantially periodic path with a predetermined period λ.

6. The tire (1) according to claim 5, wherein said fin rib (11) follows a sinusoidal path.

7. The tire (1) according to any of preceding claims, wherein said fin rib (11) has a constant width along its path when measured transversely to the fin rib (11).

8. The tire (1) according to any of claims 1 to 6, wherein said fin rib has (11) a width which along its path is not constant when measured transversely to the fin rib (11).

9. The tire (1) according to any of preceding claims, wherein each fin rib (11) has a width ranging from about 20% to about 70% of a width of the corresponding axially outermost longitudinal groove (10).

10. The tire (1) according to any of preceding claims, wherein a height of the fin rib (11) substantially corresponds to a height of the outermost longitudinal groove of said fin rib.

11. The tire (1) according to any of claims 1 to 9, wherein a height of the fin rib is less than a height of the axially outermost longitudinal groove of said fin rib.

12. The tire (1) according to any of preceding claims, wherein the fin rib (11) has a top surface parallel to a top surface of adjacent ribs.

13. The tire (1) according to any of claims 1 to 12, wherein lateral surfaces of said fin rib are parallel one to the other along the fin rib path.

14. The tire (1) according to any of preceding claims, wherein the fin rib comprises fin rib portions which are separated one from the other through transverse cuts.

15. The tire (1) according to claim 1, wherein each outermost said axially outermost longitudinal grooves comprises a fin rib.

## Patentansprüche

1. Reifen (1) mit:
- einem Paar Wulststrukturen (3),
- einer Karkassenstruktur mit wenigstens einer Karkassenlage (2), die sich zwischen den Wulststrukturen (3) erstreckt, wobei die gegenüberliegenden Seitenwände der Karkassenlage (2) den Wulststrukturen (3) zugeordnet sind,
- einer Gürtelstruktur (14), die an einer radial äußeren Position bezüglich der Karkassenstruktur aufgebracht ist,
- einem Laufflächenband (16), das an einer radial äußeren Position bezüglich der Karkassenstruktur aufgebracht ist,
- einem Paar Seitenwände (17), wobei jede Seitenwand (17) seitlich an gegenüberliegenden Seiten bezüglich der Karkassenstruktur aufgebracht ist,
wobei das Laufflächenband (16) zwei axial äußerste Längsnuten (10), wenigstens eine weitere Längsnut (9) und Längsrippen aufweist, welchen zwischen den Längsnuten (10) angeordnet sind,
wobei jede axial äußerste Längsnut (10) sich im Wesentlichen entlang einer Umfangsrichtung erstreckt,
wobei jede axial äußerste Längsnut (10) zwei Seitenwände (101, 102) aufweist,
wobei wenigstens eine der axial äußersten Längsnuten (10) ferner eine schmale Rippe (11) aufweist,
**dadurch gekennzeichnet, dass**
die schmale Rippe (11) einem Weg folgt, der im Wesentlichen nicht parallel zu den axial äußersten Längsnutseitenwänden (101, 102) ist und
die schmale Rippe (11) zwei seitliche Oberflächen (112, 113) aufweist und sie so ausgestaltet ist, dass die seitlichen Oberflächen (112, 113) abwechselnd an vorbestimmten Punkten die entsprechenden Seitenwände (101, 102) der entsprechenden axial äußersten Längsnut (10) berühren.

2. Reifen (1) nach Anspruch 1, bei dem jede axial äußerste Längsnut (10) parallel zu einer axialen Mittellinie (y-y) des Reifens ist.

3. Reifen (1) nach Anspruch 1, bei dem die schmale Rippe (11) einem wellenförmigen Weg folgt.

4. Reifen (1) nach Anspruch 1, bei dem die schmale Rippe (11) einem zickzackförmigen Weg folgt.

5. Reifen (1) nach Anspruch 1, bei dem die schmale Rippe (11) einem im Wesentlichen periodischen Weg mit einer vorbestimmten Periode λ folgt.

6. Reifen (1) nach Anspruch 5, bei dem die schmale Rippe (11) einem sinusförmigen Weg folgt.

7. Reifen (1) nach einem der vorhergehenden Ansprüche, bei dem die schmale Rippe (11) eine konstante Breite entlang ihres Wegs aufweist, wenn quer zu der schmalen Rippe (11) gemessen.

8. Reifen (1) nach einem der Ansprüche 1 bis 6, bei dem die schmale Rippe (11) eine Breite aufweist, die, wenn quer zu der schmalen Rippe (11) gemessen, entlang ihres Wegs nicht konstant ist.

9. Reifen (1) nach einem der vorhergehenden Ansprüche, bei dem jede schmale Rippe (11) eine Breite aufweist, die im Bereich von ungefähr 20% bis ungefähr 70% einer Breite der entsprechenden axial äußersten Längsnut (10) liegt.

10. Reifen (1) nach einem der vorhergehenden Ansprüche, bei dem eine Höhe der schmalen Rippe (11) im Wesentlichen einer Höhe der äußersten Längsnut der schmalen Rippe entspricht.

11. Reifen (1) nach einem der Ansprüche 1 bis 9, bei dem eine Höhe der schmalen Rippe weniger ist als eine Höhe der axial äußersten Längsnut der schmalen Rippe.

12. Reifen (1) nach einem der vorhergehenden Ansprüche, bei dem die schmale Rippe (11) eine obere Oberfläche aufweist, die parallel zu einer oberen Oberfläche benachbarter Rippen ist.

13. Reifen (1) nach einem der Ansprüche 1 bis 12, bei dem seitliche Oberflächen der schmalen Rippe entlang des Wegs der schmalen Rippe parallel zueinander sind.

14. Reifen (1) nach einem der vorhergehenden Ansprüche, bei dem die schmale Rippe schmale Rippenabschnitte aufweist, die voneinander durch Quereinschnitte getrennt sind.

15. Reifen (1) nach Anspruch 1, bei dem jede äußerste der axial äußersten Längsnuten eine schmale Rippe aufweist.

## Revendications

1. Pneu (1) comprenant :
- une paire de structures de talon (3) ;
- une structure de carcasse comprenant au moins une nappe de carcasse (2) s'étendant entre lesdites structures de talon (3), les bords latéraux opposés de ladite structure de carcasse (2) étant associés auxdites structures de talon (3) ;
- une structure de ceinture (14) appliquée dans une position radialement extérieure par rapport à ladite structure de carcasse ;
- une bande de roulement (16) appliquée dans une position radialement extérieure par rapport à ladite structure de carcasse ;
- une paire de flancs (17), chaque flanc (17) étant appliqué latéralement sur des côtés opposés par rapport à ladite structure de ca rca sse ;
dans lequel ladite bande de roulement (16) comprend deux rainures longitudinales les plus extérieures axialement (10), au moins une autre rainure longitudinale (9) et des nervures longitudinales disposées entre lesdites rainures longitudinales (10) ;
dans lequel chaque rainure longitudinale la plus axialement extérieure (10) s'étend le long d'une direction sensiblement circonférentielle ;
dans lequel chaque rainure longitudinale la plus extérieure axialement (10) comprend deux parois latérales (101, 102) ;
dans lequel au moins une desdites rainures longitudinales les plus extérieure axialement (10) comprend en outre une nervure formant ailette (11) ;
**caractérisé en ce que** la nervure formant ailette (11) suit un chemin sensiblement non parallèle aux parois latérales de la rainure longitudinale la plus extérieure axialement (101, 102) ; et
**en ce que** ladite nervure formant ailette (11) a deux surfaces latérales (112, 113) et est configurée de manière que lesdites surfaces latérales (112, 133) sont alternativement en contact, en des points prédéterminés, avec les parois latérales correspondantes (101, 102) de la rainure longitudinale la plus extérieure axialement (10) correspondante.

2. Pneu (1) selon la revendication 1, dans lequel chaque rainure longitudinale la plus extérieure axialement (10) est parallèle à une ligne centrale axiale du pneu (y-y).

3. Pneu (1) selon la revendication 1, dans lequel ladite nervure formant ailette (11) suit un chemin ondulé.

4. Pneu (1) selon la revendication 1, dans lequel ladite nervure formant ailette (11) suit un chemin en zigzag.

5. Pneu (1) selon la revendication 1, dans lequel ladite nervure formant ailette (11) suit un chemin sensiblement périodique d'une période prédéterminée λ.

6. Pneu (1) selon la revendication 5, dans lequel ladite nervure formant ailette (11) suit un chemin sinusoïdal.

7. Pneu (1) selon l'une quelconque des revendications précédentes, dans lequel ladite nervure formant ailette (11) a une largeur constante le long de son chemin lorsque mesurée transversalement à la nervure formant ailette (11).

8. Pneu (1) selon l'une quelconque des revendications 1 à 6, dans lequel ladite nervure formant ailette (11) a une largeur qui est non constante le long de son chemin lorsque mesurée transversalement à la nervure formant ailette (11).

9. Pneu (1) selon l'une quelconque des revendications précédentes, dans lequel chaque nervure formant ailette (11) a une largeur entre environ 20% et environ 70% d'une largeur de la rainure longitudinale correspondante la plus extérieure axialement (10).

10. Pneu (1) selon l'une quelconque des revendications précédentes, dans lequel une hauteur de la rainure formant ailette (11) correspond sensiblement à une hauteur de la rainure longitudinale la plus extérieure de ladite rainure formant ailette.

11. Pneu (1) selon l'une quelconque des revendications 1 à 9, dans lequel une hauteur de la nervure formant ailette est inférieure à une hauteur de la rainure longitudinale la plus extérieure axialement de ladite nervure formant ailette.

12. Pneu (1) selon l'une quelconque des revendications précédentes, dans lequel la nervure formant ailette (11) a une surface supérieure parallèle à une surface supérieure de nervures adjacentes.

13. Pneu (1) selon l'une quelconque des revendications 1 à 12, dans lequel des surfaces latérales de ladite rainure formant ailette sont parallèles entre elles le long du chemin de la nervure formant ailette.

14. Pneu (1) selon l'une quelconque des revendications précédentes, dans lequel la nervure formant ailette comprend des parties de nervure formant ailette qui sont séparées l'une de l'autre par des coupures transversales.

15. Pneu (1) selon la revendication 1, dans lequel chacune des plus extérieures desdites rainures longitudinales les plus extérieures axialement comprend une nervure formant ailette.
